# EUROPEAN PATENT APPLICATION

(11) **EP 3 699 824 A1**
(43) Date of publication of application: **26.08.2020**
(21) Application number: 19159184.1
(22) Date of filing: 25.02.2019
(51) Int. Cl.: G06K 19/07, G06K 19/077, B25H 3/00, G08B 13/24

(54) **APPARATUS FOR SECURING AN ITEM OF WORK EQUIPMENT AND USE THEREOF**

(71) Applicant: Tabya GmbH, 48149 Münster (DE)
(72) Inventor: Kelm, Agnes, 42327 Wuppertal (DE); Meins-Becker, Anica, 42781 Haan (DE); Helmus, Manfred, 58849 Herscheid (DE); Bach, Aaron, 48153 Münster (DE); Müller, Tobias, 48143 Münster (DE)
(74) Representative: Meyer zu Bexten, Elmar

(57) **Abstract**

**Problem**

With work equipment not being locked, detection of its movement can hardly be enforced, thus impeding traceability and rendering the entire yard management process prone to error. While US 2004249648 A discloses a compulsory locking system, that system allows for an identification of work equipment only at stationary distribution centers, the so-called "article stores".

**Solution**

Instead of a single low-frequency (LF) RFID chip, apparatus as per the invention use two RFID chips that transmit on different frequencies. While one chip preferably transmits in the ultra-high frequency (UHF) range, allowing the tag to be scanned from as far a distance as 12 meters, the other chip broadcasts in the high-frequency (HF) range, permitting its interrogation through mobile terminals such as consumer smartphones nearby.

## Description

### Technical Field

The invention relates to the product and process as per the first portion of the independent claims.

### Background Art

Within the construction industry, equipment is traditionally identified by means of inventory numbers, which are attached to the equipment by means of metal tags of various designs. Use of bar codes has been proposed, for instance, by BERNOLD, Leonhard E. Bar code-driven equipment and materials tracking for construction. Journal of Computing in Civil Engineering. 1990, vol.4, no.4, p.381-395.

Recently, state-of-the-art data carriers such as 1D codes (e. g., Code-128), 2D codes (e. g., DataMatrix), or radio-frequency identification (RFID) and corresponding readers have increasingly been used to identify equipment. An overview of pertinent technologies may be gathered from, e. g., MOONE, Brian. Supply Chain Management and Logistics in Construction: Delivering Tomorrow's Built Environment. 1st edition. Edited by LUNDESJO, Greger. London: Kogan Page, 2015. ISBN 0749479337. p.77-87.

Outdoors mobile assets of high value are typically tracked by advanced yard management systems (YMS) that couple location data collected by RFID and GPS systems to help supply chain managers optimize utilization of yard assets.

US 2004249648 A (ROSLER KLAUS-DIETER; GRADWOHL REINER) 09.12.2004 relates to a device for renting or distributing and returning articles such as machines etc. from an article store to a customer or employee, the device having a central control unit for processing and storing article-related and customer-related data, data entry means for entering the individual customer identification data, and storage means on the individual articles for storing article identification data which identify the article. This prior-art device is characterized by an electronically actuated lock for each individual article for connecting or including the relevant article to or in the article store, means for data communication between the lock, control unit, data entry means, and means which, when an article is again connected to or included in a free lock, report the relevant article identification data to the control unit, the lock releasing the article upon receipt of a release command which is triggered by customer identification data with access authorization, and the control unit receiving a removal signal identifying a removal operation when the relevant article is removed.

### Summary of invention

The invention as claimed is hereinafter disclosed in such a way that the technical problem with which it deals can be appreciated and the solution can be understood.

### Technical Problem

With work equipment not being locked, detection of its movement can hardly be enforced, thus impeding traceability and rendering the entire yard management process prone to error. While US 2004249648 A discloses a compulsory locking system, that system allows for an identification of work equipment only at stationary distribution centers, the so-called "article stores".

### Solution to Problem

Instead of a single low-frequency (LF) RFID chip, apparatus as per the invention use two RFID chips that transmit on different frequencies. While one chip preferably transmits in the ultra-high frequency (UHF) range, allowing the tag to be scanned from as far a distance as 12 meters, the other chip broadcasts in the high-frequency (HF) range, permitting its interrogation through mobile terminals such as consumer smartphones nearby. An embodiment of the invention therefore exploits the synergy between UHF and HF in a single locking pin, hereinafter referred to as a dongle.

### Advantageous effect of invention

The invention allows for construction companies, horticulturists, craftsmen, and any similar operation that works in a distributed manner and requires a variety of work equipment to easily and efficiently manage said equipment. Work equipment, in this context, includes large equipment such as excavators, power tools such as impact drills, manual tools such as hammers and ladders, personal protective equipment (PPE), smartphones, desks, laptops, etc. In conjunction with a suitable deposit return scheme, the dongle may be employed with any of the above-mentioned items to encourage a sense of responsibility among employees. For large equipment, instead of tagging the dongle to the device itself, the former may be attached to the corresponding key.

Herein, "managing" such equipment encompasses the following activities, all of which are supported by an embodiment of the invention.

Material planning: Based on demand, work equipment can be reserved and its use planned.

Predictive planning of statutory tests and maintenance: Accident prevention, technical supervision, and emissions inspection are equally facilitated.

Delay and standstill may be reduced by providing only ready-to-use equipment on site.

Real-time locating of work equipment.

Backtracking work equipment within the company.

Internal cost allocation as per a user-pays principle such that each cost center is charged only with those expenses that it caused in the first place: Since organizations may retrace which cost center uses what work equipment, there is no longer a need for flat-rate charges.

Optimization of asset inventories: As companies are put in a position to comprehend the demand for and degree of utilization of certain work equipment, inventory can be adjusted accordingly.

Reduced fallback to rental services: Since information about the location and utilization of equipment is readily available, there is no call for renting work equipment from service providers where in-house equipment will serve the purpose.

Protection against loss and theft: Despite high turnover frequency, employees can be put in charge of work equipment they use, which discourages both negligence and stealing.

Ensuring operating condition of work equipment: Since it is obvious who last used a particular asset, employees are motivated to return the same to the warehouse in good order.

Enforced use of personal protective equipment.

### Description of embodiments

In a deposit return scheme as per the invention, work equipment is locked to a fixture or mount by means of a dongle, preventing it from being removed without proper authorization. A worker may request to disengage the lock by means of a suitable client device, accepting responsibility for the equipment and authorizing his or her cost center (e. g., contract site) to be charged with an equipment-dependent fee. Using appropriate software, disposition of the equipment remains transparent to everyone in the respective organization and can be traced back.

Preferably, the locking system releases work equipment only where no statutory tests are pending or prior defects have been reported.

By means of said dongle, each item of equipment may be identified at any step of the asset management process. For this purpose, a one-to-one ID is stored on two transponders that are installed in the dongle. Both transponders are RFID transponders, with one transmitting in the UHF range and the other in the HF or LF range. Hence, the dongle may be interrogated over an approximate distance of 4 to 6 meters using RFID guns or even 12 meters using stationary antennas attached to access gates. Given that UHF readers may not be ready on hand for every worker, the dongle comprises an additional HF RFID transponder that can be interrogated using an off-the-shelf smartphone without any peripheral device. Also, the dongle makes use of the HF RFID transponder to authenticate vis-à-vis the locking system.

The use of RFID transponders bears the major advantage that electrically passive tags are readily available on the market. As a result, equipment may be fit with a dongle as claimed without adding any battery while allowing for its interrogation at any time.

It is however well understood that an alternative embodiment may, instead of a passive UHF tag, employ embedded Bluetooth as per IEEE 802.15.1. Such device may make use of energy harvesting or battery power, in which case the corresponding battery could be inductively recharged while the dongle is engaged in the locking system.

Where a reader does not support radio transmission, an optical medium can be provided for contingency. Suitable media comprise one-dimensional barcodes, data matrix, or QR codes, any of which may be read by conventional camera.

Thanks to the HF RFID transponder, construction workers on site are put in a position to identify an item by means of suitable software, for example, to hand over responsibility for the item to a co-worker. Another application of the dongle would be to, using the software formerly mentioned, report an item as defective such that replacement may be provisioned.

Preferably, the software and associated process adhere to the principles of lean management, standards and best practices applied throughout the logistics industry, and recommendations by standard bodies such as GS1.

### Industrial applicability

The invention is applicable, inter alia, throughout the building and construction industry.

### Citation list

The following literature has been cited hereinbefore.

### Patent literature

US 2004249648 A (ROSLER KLAUS-DIETER; GRADWOHL REINER) 09.12.2004

### Non-patent literature

BERNOLD, Leonhard E. Bar code-driven equipment and materials tracking for construction. Journal of Computing in Civil Engineering. 1990, vol.4, no.4, p.381-395. MOONE, Brian. Supply Chain Management and Logistics in Construction: Delivering Tomorrow's Built Environment. 1st edition. Edited by LUNDESJO, Greger. London: Kogan Page, 2015. ISBN 0749479337. p.77-87.

## Claims

1. Apparatus for securing an item of work equipment
**characterized in**
a notch configured to be engaged by a locking actuator,
a first transponder configured to be interrogated on a first radio frequency and a second transponder configured to be interrogated on a second radio frequency other than the first frequency.

2. Apparatus as per Claim 1
wherein
the first frequency is ultra-high, preferably between 300 megahertz and 1 gigahertz.

3. Apparatus as per Claim 1 or Claim 2
wherein
the second frequency lies within a shortwave band, preferably above 1.7 megahertz.

4. Apparatus as per Claim 3
wherein
the second radio frequency is high, preferably between 3 and 30 megahertz.

5. Apparatus as per Claim 4
wherein
the second radio frequency is between 13.553 and 13.567 MHz, preferably 13.56 megahertz.

6. Apparatus as per Claim 5
wherein
the second transponder is configured to be interrogated by means of near-field communication.

7. Apparatus as per Claim 6
wherein
the apparatus is elongate and
the second transponder is located at most 4 centimeters beneath a surface of the apparatus, preferably at a tip of the apparatus.

8. Apparatus as per any of the preceding claims
wherein
the apparatus carries a preferably two-dimensional barcode for uniquely identifying the apparatus.

9. Apparatus as per Claim 8
wherein
the barcode is a data matrix or quick response code.

10. Apparatus as per Claim 8 or Claim 9
wherein
the transponders are preferably electrically passive and are each configured to, upon being interrogated, emit a key that corresponds to the barcode.

11. Apparatus as per any of the preceding claims
wherein
the apparatus is resistant to mechanical stress such as pressure and scraping, ultraviolet light, and chemicals such as fuel.

12. Work equipment
**characterized in**
a preferably non-detachable apparatus as per any of the preceding claims.

13. Power tool as per Claim 12
**characterized in**
a power cord comprising the apparatus.

14. Construction yard
**characterized in**
work equipment as per Claim 12 or Claim 13.

15. Use of an item of equipment as per Claim 12 or Claim 13
**characterized in that**
a client such as a handheld device or stationary antenna interrogates one of the transponders for radio-frequency identification of the locked item,
the client forwards the identification to a remote server,
based on the identification and preferably upon checking for pending statutory inspections or defects of the item, the server charges a cost center indicated by the client for the item and instructs the locking actuator to disengage the notch.
